# EUROPEAN PATENT SPECIFICATION

(11) **EP 1 980 869 B1**
(45) Date of publication and mention of the grant of the patent: **27.02.2013**
(21) Application number: 08103444.9
(22) Date of filing: 08.04.2008
(51) Int. Cl.: G01S 5/14, G01S 19/47, G01S 19/15

(54) **Navigation guidance for aircraft approach and landing**
Navigationsführung für Flugzeugnäherungen und -landungen
Guidage de navigation pour approche et atterrissage d'avion

(30) Priority: 10.04.2007 US 733349
(43) Date of publication of application: 15.10.2008
(73) Proprietor: Honeywell International Inc., Morristown, NJ 07962 (US)
(72) Inventor: Elchynski, Joseph J., Saftey Harbor, FL 34695 (US)
(74) Representative: Buckley, Guy Julian

(56) References cited:
- EP-A2- 0 498 655
- US-A- 5 583 774
- US-A- 5 820 080
- US-A- 5 862 495
- US-A- 6 094 607
- US-A1- 2003 149 528
- US-B1- 6 216 983
- GREG HATTEN ET AL: "Navigation Upload Performance", ION GPS 2000, vol. 431, 19 September 2000 (2000-09-19), page 425, XP55028490,

## Description

### FIELD

The present invention relates generally to aircraft navigation, and more particularly, relates to providing navigation guidance to pilots that are landing in low visibility conditions and/or at airports that do not contain a ground infrastructure in place to support precision approach.

### BACKGROUND

A "precision approach" is an approach that is aligned with the runway. A precision approach system provides course guidance, distance from runway, and elevation to a pilot. Instrument Landing System (ILS) is one of the most common precision approach systems.

The ILS provides three-dimensional information to a pilot using a localizer, a glidepath, marker beacons, and Distance Measuring Equipment (DME). The localizer provides course guidance to the pilot, aligning the aircraft with the runway. The glidepath provides an indication to the pilot regarding how far the aircraft is above or below a glideslope. The DME provides an indication to the pilot regarding how far the aircraft is from the beacons on the ground.

Other precision approach systems include the Microwave Landing System (MLS) and the Wide Area Augmentation System (WAAS). While both of these systems are designed to replace the ILS by providing higher-precision approach guidance to the pilot, the United States Federal Aviation Administration (FAA) has discontinued the use of MLS in favor of WAAS. WAAS uses a combination of satellites and ground-based stations to send correction signals to Global Positioning System (GPS) receivers, as well as providing integrity information for each satellite's signal, which improves the satellite's signal. Europe and Japan have similar systems, the European Geostationary Navigation Overlay System (EGNOS) and the Japanese Multi-Functional Satellite Augmentation System (MSAS), respectively.

Unfortunately, military and commercial aircraft do not have a worldwide runway approach guidance capability to assist pilots in landing in low visibility conditions. Some airports, such as regional airports or expeditionary airfields, do not contain a ground infrastructure in place to support precision approach. Even at more sophisticated airports, military and commercial aircraft do not have a worldwide back-up approach navigation aide when the ground based precision approach landing system, such as the ILS, becomes unavailable.

US 6,216,983 discloses an ephemeris and attitude determination system that determines the orbital position for a satellite system utilizing existing satellite subsystems. US 5,820,080 discloses a precision equivalent landing system that provides both relative position and altitude of an incoming aircraft with respect to a landing approach path. US 2003/0149528 discloses positioning and navigation method and system in which the velocity and acceleration from an inertial navigation processor and an attitude and heading system are used to aid the code and carrier phase tracking of global positioning system satellite signals. Therefore, it would be beneficial to provide pilots with runway approach guidance when ground based precision approach landing systems are unavailable.

### SUMMARY

The present invention in its various aspects is as set out in the appended claims. A system and method is described for providing pilots with navigational guidance when landing in low visibility conditions and/or at airports that do not contain a ground infrastructure in place to support precision approach. The system includes a navigation processor that provides as an output a navigation solution and a Kalman filter that receives data from a GPS sensor and the navigation solution from the navigation processor, and estimates navigation corrections that are provided to the navigation processor. The Kalman filter uses a dynamic range error model that changes as a function of ephemeris age. The dynamic range error model may weigh measurements from satellites with newer ephemeris more than satellites with older ephemeris.

The navigation processor may use a gravity error model to calculate the navigation solution when data from the GPS sensor is unavailable. For example, the gravity error model may be a successor to the NASA and NIMA joint geopotential model, EGM96, such as a five arc-minute (arc-min) gravity model. Additionally, the navigation processor may use encrypted corrections to calculate the navigation solution.

The GPS sensor may include a measurement model based on a Precise Positioning Service (PPS) Accuracy Improvement Initiatives (AII). Additionally, the GPS sensor may include a Wide Area Augmentation System (WAAS) troposphere error model.

The navigation solution may be provided to a display that depicts glideslope symbology and localizer guidance.

The method may include receiving data from at least one inertial sensor and at least one Global Positioning System (GPS) sensor. The data from the at least one GPS sensor is calculated using a measurement model based on a Precise Positioning Service (PPS) Accuracy Improvement Initiatives (AII) and a Wide Area Augmentation System (WAAS) troposphere error model. The method further includes calculating correction data using a dynamic range error model that changes as a function of ephemeris age and calculating a navigation solution based on the data received from the at least one inertial sensor and the correction data. The dynamic range error model may weigh measurements from satellites with newer ephemeris more than satellites with older ephemeris.

The method may also include using a gravity error model to calculate the navigation solution when data from the GPS sensor is unavailable. The gravity error model may be a successor to the EGM96 geopotential model, such as a five arc-min gravity model. The method may also include using encrypted corrections to calculate the navigation solution.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Presently preferred embodiments are described below in conjunction with the appended drawing figures, wherein like reference numerals refer to like elements in the various figures, and wherein:
Fig. 1 is a block diagram of segments of GPS, according to an example;
Fig. 2 is a block diagram of a navigation system, according to an example;
Fig. 3 is a block diagram of a GPS receiver, according to an example; and
Fig. 4 is a screen shot of a flight display, according to an example.

### DETAILED DESCRIPTION

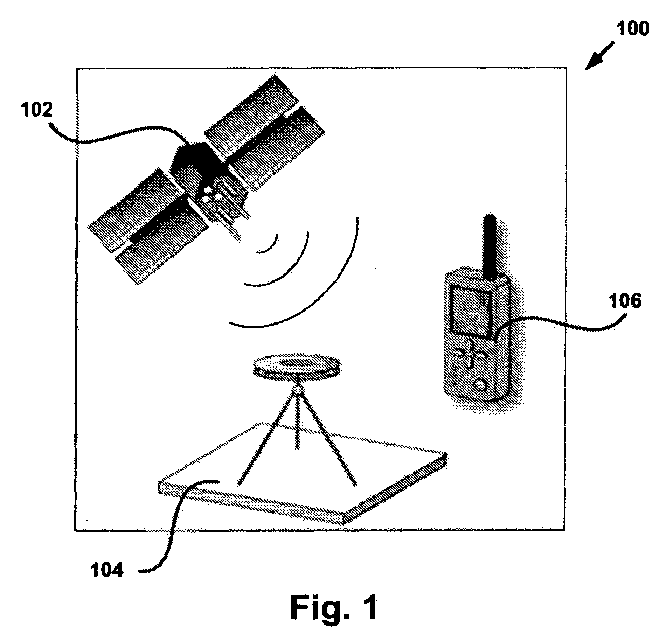

Fig. 1 is a block diagram of GPS segments 100. The GPS segments 100 include a space segment 102, a control segment 104, and a user segment 106. The space segment 102 includes a set of satellites, the control segment 104, sometimes also referred to as the ground segment, includes a set of ground control stations that communicate with the satellites and determine their locations, and the user segment 106 includes GPS receivers and people who use them.

The space segment 102 nominally includes twenty-four satellites in six orbital planes (four satellites in each plane). The satellites operate in circular 20,200 km orbits at an inclination angle of 55 degrees with a 12-hour period. The spacing of the satellites in orbit is designed so that ideally five to eight satellites are visible to a user regardless of user location. The number and capabilities of the satellites in the space segment increases over time as new satellites are deployed.

The control segment 104 currently includes six monitor stations, five ground antennas, and a master control station. The control segment 104 also includes an alternate master control station. The monitor stations track satellites in view, accumulating ranging data. Using the ranging data, the master control station determines satellite orbits and updates each satellite's navigation message. The ground antennas transmit the updated navigation messages to the satellites. Over time, the amount of equipment in the control segment 104 is increased and improved to provide additional capabilities.

The user segment 106 includes antennas and receiver-processors that provide positioning, velocity, and precise timing to a user. Users include both military and civilian users. A receiver typically calculates the distance to four satellites and solves for time, latitude, longitude, and altitude. The receiver determines the distance to a satellite by measuring the amount of time for a radio signal from the satellite to arrive at the receiver's antenna.

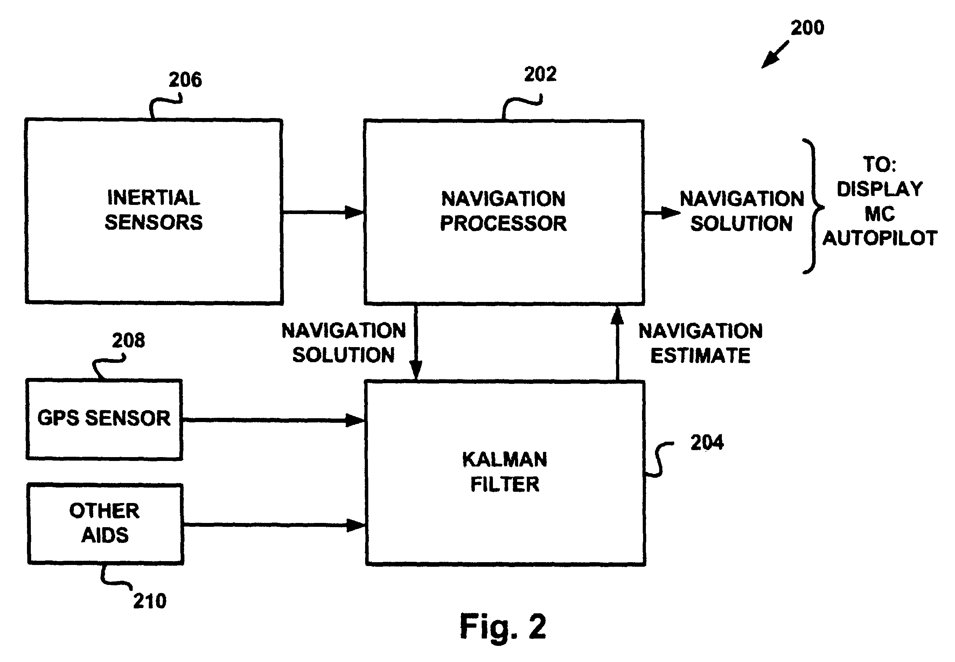

Fig. 2 is a block diagram of a navigation system 200. The navigation system 200 may be an embedded GPS/INS (EGI) system, such as Honeywell's H-764G EGI. The navigation system 200 includes a navigation processor 202 and a Kalman filter 204. While the navigation processor 202 and the Kalman filter 204 are shown as separate components in Fig. 2, the navigation processor 202 and the Kalman filter 204 can also be co-located as a single component. The navigation processor 202 receives inertial data from inertial sensors 206. The Kalman filter 204 receives data from one or more GPS sensors 208 and optionally from other aids 210.

Generally, the navigation processor 202 calculates a navigation solution, which is provided to the Kalman filter 204. The Kalman filter 204 may use the navigation solution to estimate navigation corrections. The Kalman filter 204 estimates are provided to the navigation processor 202, which may use the estimates to calculate a more accurate navigation solution. The corrected navigation solution may be provided to different avionic systems, such as autopilot, mission computer, and various display systems.

The inertial sensors 206 provide acceleration and angular rate data to the navigation processor 202. Typically, the inertial sensors 206 include three orthogonally mounted acceleration sensors and three nominally orthogonally mounted inertial angular rate sensors, which may provide three-axis acceleration and angular rate measurement signals. Accordingly, the inertial sensors 206 may include three accelerometers and three gyroscopes. The three accelerometers may be any type of accelerometer, such as a force re-balance, resonating beam, or MEMS accelerometer. The three gyroscopes may be any type of gyroscope, such as a ring laser or MEMS gyroscope.

The navigation processor 202 may be any combination of hardware, firmware, and/or software operable to provide a navigation solution. The navigation solution may be a three-dimensional position, three-dimensional velocity, and three-dimensional attitude solution. However, the exact navigation solution may depend on the operational mode of the aircraft. Other avionics systems may use the navigation solution. For example, the aircraft's position may be displayed for the pilot on a head-up display.

The GPS sensor 208 may be a GPS receiver, Time Difference of Arrival (TDOA), Galileo, or any other radio frequency (RF) ranging system. It is understood that the term GPS sensor as used in this specification includes any RF ranging system. The GPS sensor 208 may provide three-dimensional position, velocity, and time (PVT) data. Additionally, the GPS sensor 208 may provide pseudorange and deltarange (PR/DR) information and/or in-phase and quadrature (I & Q) information. If multiple GPS sensors 208 are used with separate and suitably located antennas, then an estimate of heading may be computed using the information from the GPS sensors 208.

Additional aids may optionally provide data to the Kalman filter 204. For example, the other aids 210 may include a magnetometer. The magnetometer may detect the Earth's magnetic field. Data from the magnetometer may be used to determine the heading of the aircraft. This information may be used to initialize the navigation system 200 or to aid the navigation processor 202. The navigation processor 202 may use the heading information from the magnetometer in combination with GPS PVT information, GPS PR/DR information, GPS I & Q information, GPS-derived heading information, and/or inertial-derived heading information to provide an improved heading reading to the pilot.

The Kalman filter 204 may be any combination of hardware, firmware, and/or software operable to provide an estimate. Kalman filters are well known in the art for use in providing correction data to provide a more accurate navigation solution. The Kalman filter 204 may receive data from the navigation processor 202, the GPS sensor 208, and optionally the other aids 210 and estimate navigation corrections of the aircraft's position, velocity, attitude, and/or other vehicle states. The Kalman filter 204 may estimate navigation corrections using a model for various error states. For example, the Kalman filter 204 typically includes error models for navigation states, inertial sensor states, GPS clock states, and GPS range states. The Kalman filter 204 may provide the estimate to the navigation processor 202.

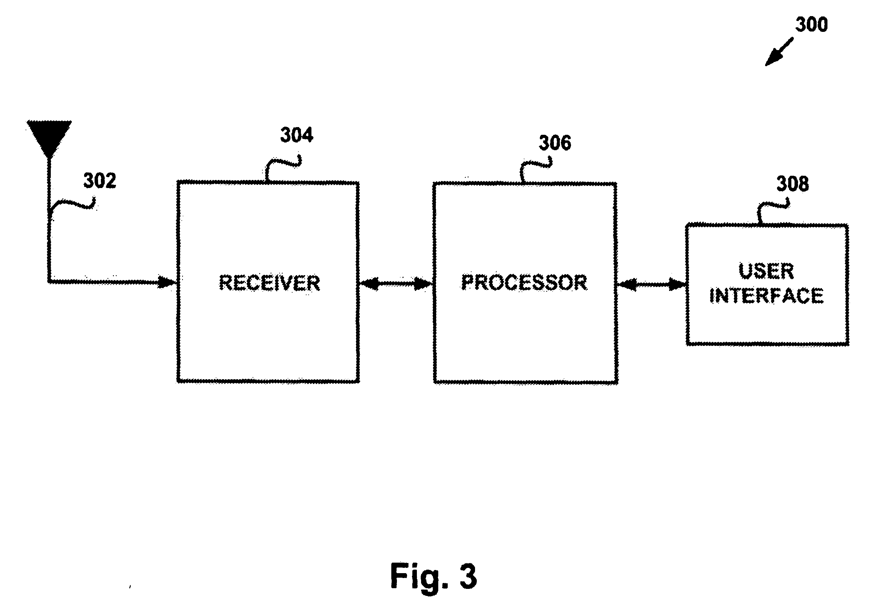

Fig. 3 is a block diagram of a GPS receiver 300. The GPS receiver 300 may be used as the GPS sensor 208 depicted in Fig. 2. The GPS receiver 300 includes an antenna 302, a receiver 304, a processor 308, and a user interface 310. The GPS receiver 300 may also include additional components, such as a power supply.

The antenna 302 detects electromagnetic wave signal transmitted by the GPS satellites, converts and amplifies the signal, and provides the signal to the receiver 304. The antenna 302 may be a mono pole or dipole, a quadrifilar helix (Volute), a spiral helix, a microstrip (patch), a choke ring, or any other appropriate type of antenna. For airborne applications, the antenna 302 is typically a microstrip antenna.

Depending on the type of receiver, the receiver 304 tracks course/acquisition (C/A) code and/or precision (P) code, which are both broadcasted from the GPS satellites. The receiver 304 receives the GPS signal from the antenna 302 and down converts the signal into an intermediate frequency (IF). Typically, the IF signals are sampled and digitized by an analog to digital (A/D) converter. The samples are then forwarded to a digital signal processor (DSP).

The DSP contains multiple channels to track the carriers and codes from multiple satellites. Each channel contains code and carrier tracking loops to perform code and carrier-phase measurements as well as navigation message data demodulation. The desired measurements and the navigation message data are forwarded to the processor 306.

The processor 306 controls the operation of the GPS receiver 300. The processor 306 uses a measurement model to calculate and provide three-dimensional position, velocity, and time (PVT), pseudorange and deltarange (PR/DR), and/or in-phase and quadrature (I & Q) information to the Kalman filter 204. The processor 306 also receives information from and provides information to the user interface 308.

The user interface 308 allows the user of the GPS receiver 300 to enter commands, external data, such as station number or antenna height, and/or menu selections. For example, the user interface 308 may include a keypad. The user interface 308 may also include a display. The display may provide computed coordinates, visible satellites, data quality indices, and other suitable information to the user.

By fusing one or more of the following navigation algorithms and/or error models into the navigation system 200, the navigation solution may be used to provide pilots with navigational guidance when landing in low visibility conditions and/or at airports that do not contain a ground infrastructure in place to support precision approach. For example, this navigational guidance may support approaches to 250' height above touchdown (HAT).

### Gravity Error Model

GPS data may be lost due to radio frequency interference as well as other reasons. When GPS data is not available, the navigation solution is calculated by the navigation processor 202 using data from the inertial sensors 206. Unfortunately, inertial sensor-based navigation solutions may rapidly degrade due to gravitational anomalies and deflections that occur over parts of the world. However, when the GPS data is lost, the guidance quality of the navigation solution needs to be maintained to ensure safety when performing a precision approach.

To ensure safety when performing a precision approach, a gravity error model may be used by the navigation processor 202 to calculate the navigation solution when the GPS data is unavailable. The gravity error model may be a successor to the EGM96 geopotential model, which provides a 15 arc-min resolution. For example, a five arc-min Earth Geopotential Model (EGM) gravity model may be used, which would provide a higher resolution by a factor of three. By using the five arc-min EGM gravity model, the inertial sensor-based navigation solution does not degrade as rapidly, providing acceptable approach guidance quality for a reasonable amount of time when GPS data is unavailable.

### GPS Receiver Measurement Model

Improvements to the GPS receiver 300 measurement model may be used to provide pilots with navigation guidance when landing in low visibility conditions and/or at airports that do not contain a ground infrastructure in place to support precision approach. The GPS receiver 300 measurement model may be improved by incorporating improvements and upgrades in the GPS satellite space segment 102 and control segment 104. As a result the GPS receiver 300 may provide more accurate GPS measurements to the navigation system 200.

The measurement model typically used in the GPS receiver 300 is based on conservative estimates established when GPS became operational in the 1980s. Since then, newer block II GPS satellites have been deployed that provide improved accuracy. By changing the measurement model to account for improvements obtained with these newer satellites, navigation performance, including guidance protection levels, is improved.

The GPS measurement model includes correlation times, bias/noise estimates, and probability of false alarm rates based on current Precise Positioning Service (PPS) Accuracy Improvement Initiatives (AII). PPS is a high accuracy service based upon processing P-code signals modulated on both the L1 frequency and the L2 frequency. AII is an upgrade to the GPS control segment 104 that incorporates additional tracking stations and an improvement in the quality of the navigation data calculated at the master control station.

### WAAS Troposphere Error Model

The troposphere is the lower part of the atmosphere that is non-dispersive for frequencies up to 15GHz. When the GPS satellite signal pierces through the troposphere, the troposphere causes a distortion of the GPS signal prior to being received by the antenna 302. The distortion is caused by local temperature, pressure, and relative humidity. Left uncompensated, this distortion of the signal may result in uncorrelated GPS measurement errors.

In the 1980s, a simple troposphere error model was developed and was implemented in most GPS receivers. This model was attractive at the time because it took very little CPU resources to implement, and the model reduced the measurement error due to troposphere to a level that was lower than the space segment 102 errors and the control segment 104 errors. However, because of improvements in the space segment 102 and the control segment 104, the troposphere error has become a more dominate error source.

Incorporating the higher fidelity WAAS troposphere error model into the GPS receiver 300 may correct a larger percent of the GPS measurement error caused by the troposphere.

### Encrypted Corrections

The satellites that have most recently been deployed into the space segment 102 are called Global Positioning System Block IIR-M (GPS IIR-M) ("R" for replacement and "M" for modernized) satellites. The Block IIR-M satellites incorporate two new military signals for enhanced encryption and anti-jamming performance. Authorized military users have access to encrypted corrections.

These encrypted corrections are a result of the Accuracy Improvement Initiatives (All) improvements to the space segment 102 and the control segment 104. For example, the Wide Area GPS Enhancement (WAGE) improves GPS accuracy by providing more accurate satellite clock and ephemeris (orbital) data to the receiver 300. WAGE has the effect of changing the navigation upload rate from once a day to once every three hours. By using the encrypted corrections from the IIR-M satellites, the navigation processor 202 may provide a more accurate navigation solution.

### Dynamic Range Error Model

GPS satellites provide more accurate GPS measurements immediately after an ephemeris upload from the control segment 104. As a result, the accuracy of the GPS receiver 300 degrades as the data from the control segment 104 to the space segment 102 ages. To account for this degradation of data, the Kalman filter 204 includes a dynamic range error model that changes as a function of ephemeris age. Measurements from satellites with newer ephemeris are weighted more than those satellites with older ephemeris. By incorporating the dynamic range error model into the Kalman filter 204, the navigation processor 202 may provide a more accurate navigation solution.

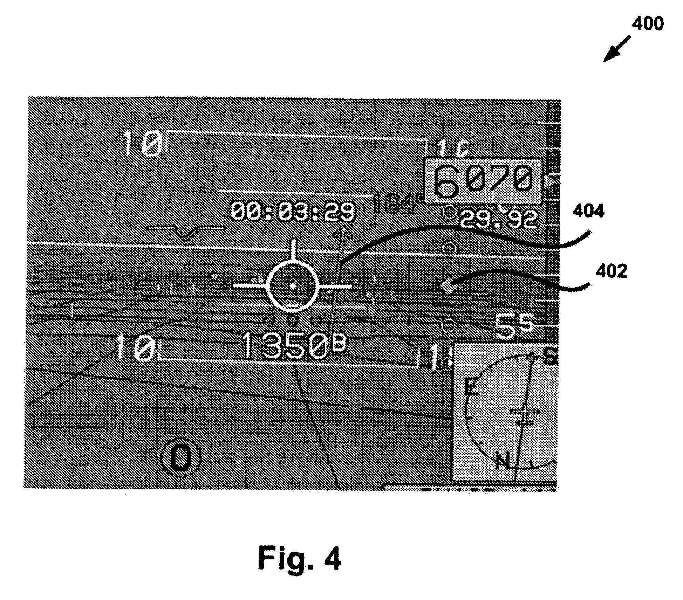

Fig. 4 is a screen shot of a flight display 400. The flight display 400 includes glideslope symbology 402 similar to symbology used by ILS. Additionally, the flight display 400 includes localizer guidance 404 based on runway approach path data. The flight display 400 may be provided to the pilot when landing in low visibility conditions and/or at airports that do not contain a ground infrastructure in place to support precision approach. As a result, even in non-ideal conditions, the pilot may safely land the aircraft.

## Claims

1. A navigation system, comprising in combination:
a navigation processor (202) that provides as an output a navigation solution; and
a Kalman filter (204) that receives data from a Global Positioning System (GPS) sensor (208) and the navigation solution from the navigation processor (202), and estimates navigation corrections that are provided to the navigation processor (202), **characterized in that** the Kalman filter (204) uses a dynamic range error model that changes as a function of ephemeris age, wherein the dynamic range model weighs measurements from satellites with newer ephemeris more than satellites with older ephemeris.

2. The navigation system of claim 1, wherein the navigation processor (202) uses a five arc-min gravity model to calculate the navigation solution when data from the GPS sensor (208) is unavailable.

3. The navigation system of claim 1, wherein the GPS sensor (208) includes a measurement model based on a Precise Positioning Service (PPS) Accuracy Improvement Initiatives (AII).

4. The navigation system of claim 1, wherein the GPS sensor (208) includes a Wide Area Augmentation System (WAAS) troposphere error model.

5. The navigation system of claim 1, wherein the navigation processor (202) uses encrypted corrections to calculate the navigation solution.

6. The navigation system of claim 1, wherein the navigation solution is provided to a display that depicts glideslope symbology and localizer guidance.

7. A method for providing pilots with navigational guidance when landing in low visibility conditions or at airports that do not contain a ground infrastructure in place to support precision approach, comprising in combination:
receiving data from at least one inertial sensor (206);
receiving data from at least one Global Positioning System (GPS) sensor (208), wherein the data from the at least one GPS sensor (208) is calculated using a measurement model based on a Precise Positioning Service (PPS) Accuracy Improvement Initiatives (AII) and a Wide Area Augmentation System (WAAS) troposphere error model; **characterized in that**
calculating correction data using a dynamic range error model that changes as a function of ephemeris age, wherein the dynamic range error model weighs measurements from satellites with newer ephemeris more than satellites with older ephemeris; and
calculating a navigation solution based on the data received from the at least one inertial sensor (206) and the correction data.

8. The method of claim 7, further comprising using a gravity error model to calculate the navigation solution when data from the GPS sensor (208) is unavailable.

## Patentansprüche

1. Navigationssystem, das in Kombination Folgendes umfasst:
einen Navigationsprozessor (202), der als eine Ausgabe eine Navigationslösung bereitstellt; und
ein Kalmanfilter (204), der Daten von einem Sensor des globalen Positionierungsystems (GPS-Sensor) (208) und die Navigationslösung von dem Navigationsprozessor (202) empfängt, und der Navigationskorrekturen, die für den Navigationsprozessor (202) bereitgestellt werden, schätzt, **dadurch gekennzeichnet, dass** das Kalmanfilter (204) ein dynamisches Fehlerbereichsmodell verwendet, das sich als eine Funktion des Ephemeridenalters verändert, wobei das dynamische Fehlerbereichsmodell Messungen von Satelliten mit aktuelleren Ephemeriden stärker gewichtet als die von Satelliten mit älteren Ephemeriden.

2. Navigationssystem nach Anspruch 1, wobei der Navigationsprozessor (202) ein Gravitationsmodell von fünf Bogenminuten verwendet, um die Navigationslösung zu berechnen, wenn Daten von dem GPS-Sensor (208) nicht verfügbar sind.

3. Navigationssystem nach Anspruch 1, wobei der GPS-Sensor (208) ein Messmodell auf der Basis des präzisen Positionierungsdienstes (PPS) der Initiativen zur Genauigkeitsverbesserung (AII) enthält.

4. Navigationssystem nach Anspruch 1, wobei der GPS-Sensor (208) ein Troposphärenfehlermodell des Erweiterungssystems für einen großen Bereich (WAAS) enthält.

5. Navigationssystem nach Anspruch 1, wobei der Navigationsprozessor (202) verschlüsselte Korrekturen verwendet, um die Navigationslösung zu berechnen.

6. Navigationssystem nach Anspruch 1, wobei die Navigationslösung auf einer Anzeigevorrichtung, die eine Gleitwegsymbolik und eine Ortungsführung darstellt, bereitgestellt wird.

7. Verfahren, um für Piloten beim Landen unter eingeschränkten Sichtbedingungen oder auf Flughäfen, die über keine Bodeninfrastruktur verfügen, eine Navigationsführung bereitzustellen, um eine Präzionslandeannäherung zu unterstützen, wobei das Verfahren in Kombination Folgendes umfasst:
Empfangen von Daten von mindestens einem Trägheitssensor (206);
Empfangen von Daten von mindestens einem Sensor des globalen Positionierungsystems (GPS-Sensor) (208), wobei die Daten von dem mindestens einen GPS-Sensor (208) unter Verwendung eines Messmodells auf der Basis des präzisen Positionierungsdienstes (PPS) der Initiativen zur Genauigkeitsverbesserung (AII) und eines Troposphärenfehlermodells des Erweiterungssystems für einen großen Bereich (WAAS) berechnet werden; **dadurch gekennzeichnet, dass**
das Berechnen von Korrekturdaten unter Verwendung eines dynamischen Fehlerbereichsmodells, das sich als eine Funktion des Ephemeridenalters verändert, erfolgt, wobei das dynamische Fehlerbereichsmodell Messungen von Satelliten mit aktuelleren Ephemeriden stärker gewichtet als die von Satelliten mit älteren Ephemeriden; und
das Berechnen einer Navigationslösung auf der Basis der Daten, die von dem mindestens einen Trägheitssensor (206) empfangen worden sind, und auf der Basis von Korrekturdaten erfolgt.

8. Verfahren nach Anspruch 7, das ferner ein Verwenden eines Gravitationsfehlermodells umfasst, um die Navigationslösung zu berechnen, wenn Daten von dem GPS-Sensor (208) nicht verfügbar sind.

## Revendications

1. Système de navigation, comprenant en combinaison :
un processeur de navigation (202) qui fournit en sortie une solution de navigation ; et
un filtre de Kalman (204) qui reçoit des données depuis un capteur de Système de Positionnement Global (GPS) (208) et la solution de navigation depuis le processeur de navigation (202), et estime des corrections de navigation qui sont fournies au processeur de navigation (202), **caractérisé en ce que** le filtre de Kalman (204) utilise un modèle d'erreur de gamme dynamique qui change en fonction de l'âge d'éphéméride, le modèle de plage dynamique pondérant davantage les mesures provenant des satellites aux éphémérides plus récentes que celles des satellites aux éphémérides plus anciennes.

2. Système de navigation selon la revendication 1, dans lequel le processeur de navigation (202) utilise un modèle de gravité de cinq minutes d'arc pour calculer la solution de navigation quand aucune donnée ne provient du capteur GPS (208).

3. Système de navigation selon la revendication 1, dans lequel le capteur GPS (208) comporte un modèle de mesure basé sur des Initiatives d'Amélioration de Précision (AII) du Service de Positionnement Précis (PPS).

4. Système de navigation selon la revendication 1, dans lequel le capteur GPS (208) comporte un modèle d'erreur de troposphère d'un système WAAS (Système de renforcement à couverture étendue).

5. Système de navigation selon la revendication 1, dans lequel le processeur de navigation (202) utilise des corrections cryptées pour calculer la solution de navigation.

6. Système de navigation selon la revendication 1, dans lequel la solution de navigation est fournie à un affichage qui représente une symbologie d'alignement de descente et un guidage localisateur.

7. Procédé de fourniture aux pilotes d'un guidage de navigation pour atterrissage en conditions de faible visibilité ou à des aéroports qui ne comportent pas d'infrastructure sol en place pour assister l'approche de précision, comprenant en combinaison :
la réception de données depuis au moins un capteur inertiel (206) ;
la réception de données depuis au moins un capteur de Système de Positionnement Global (GPS) (208), dans lequel les données provenant de l'au moins un capteur GPS (208) sont calculées en utilisant un modèle de mesure basé sur des Initiatives d'Amélioration de Précision (AII) de Service de Positionnement Précis (PPS) et un modèle d'erreur de troposphère d'un système WAAS (Système de renforcement à couverture étendue) ; **caractérisé par**
le calcul de données de correction en utilisant un modèle d'erreur de plage dynamique qui change en fonction de l'âge d'éphéméride, le modèle d'erreur de plage dynamique pondérant davantage les mesures provenant des satellites aux éphémérides plus récente que celles des satellites aux éphémérides plus anciennes ; et
le calcul d'un solution de navigation en fonction des données reçues depuis l'au moins un capteur inertiel (206) et des données de correction.

8. Procédé selon la revendication 7, comprenant en outre l'utilisation d'un modèle d'erreur de gravité pour calculer la solution de navigation quand aucune données ne provient du capteur GPS (208).
